# EUROPEAN PATENT APPLICATION

(11) **EP 2 378 783 A1**
(43) Date of publication of application: **19.10.2011**
(21) Application number: 11160519.2
(22) Date of filing: 30.03.2011
(51) Int. Cl.: H04N 13/00

(54) **3D display apparatus, method for setting display mode, and 3D display system**

(30) Priority: 13.04.2010 KR 20100033803
(71) Applicant: Samsung Electronics Co., Ltd., Gyeonggi-do (KR)
(72) Inventor: Park, Jae-sung, Gyeonggi-do (KR); Ha, Tae-hyeun, Gyeonggi-do (KR); Park, Jung-jin, Gyeonggi-do (KR); Choi, Nak-won, Incheon (KR)
(74) Representative: Bruce, Alexander Richard Henry

(57) **Abstract**

A 3D display apparatus, a method for setting a display mode thereof, and a 3D image providing system are provided. The method for setting a display mode in a 3D display apparatus which displays a 3D image in association with at least one 3D glasses include obtaining information regarding an age of a user who is wearing the 3D glasses and adjusting a stereoscopic sense of the 3D image according to the age information. Since the 3D image display apparatus determines the age of a user and adjusts 3D image display environment according to the age of a user, the user may feel less fatigued while viewing the 3D image.

## Description

The present invention relates to a three-dimensional (3D) display apparatus, a method for setting a display mode thereof, and a system for providing 3D display, and more particularly, to a 3D display apparatus which displays a right-eye image and a left-eye image alternately, a method for setting a display mode, and a system for providing 3D display.

Three-dimensional stereoscopic image technology is applicable to various fields such as information communication, broadcasting, medicine, education & training, military, games, animation, virtual reality, computer aided design (CAD), and industrial technology, and is regarded as a core base technology for the next generation three-dimensional stereoscopic multimedia information communication, which is required in all the aforementioned fields.

Generally, a stereoscopic sense that a person perceives occurs from a complex effect of the degree of a change of thickness of the person's eye lens according to the location of an object to be observed, the angle difference of the object observed from both eyes, the differences of location and shape of the object observed from both eyes, the time difference due to a movement of the object, and other various psychological and memory effects.

In particular, binocular disparity, caused by about a 6-7 cm lateral distance between the person's left eye and right eye, can be regarded as the main cause of the stereoscopic sense. Due to binocular disparity, the person perceives the object with an angle difference, which makes the left eye and the right eye receive different images, and when these two images are transmitted to the person's brain through retinas, the brain can perceive the original three-dimensional stereoscopic image by combining the two pieces of information exactly.

There are two types of stereoscopic image display apparatuses: glasses-type apparatuses which use special glasses, and nonglasses-type apparatuses which do not use such special glasses. A glasses-type apparatus may adopt a color filtering method which separately selects images by filtering colors which are in mutually complementary relationships, a polarized filtering method which separates the images received by a left eye from those received by a right eye using a light-shading effect caused by a combination of polarized light elements meeting at right angles, or a shutter glasses method which enables a person to perceive a stereoscopic sense by blocking a left eye and a right eye alternately in response to a sync signal which projects a left image signal and a right image signal to a screen.

If a user views a 3D image for a long time or views a 3D image which is too bright or too stereoscopic, the user may feel fatigue easily. Particularly, children or senior citizens may get tired easily while watching a 3D image. Therefore, recently, 3D glasses for children and 3D glasses for adults are produced separately, taking into consideration the level of fatigue felt by people of different age.

However, even if 3D glasses for children and 3D glasses for adults are produced separately, a user still needs to adjust a 3D display environment such as brightness or stereoscopic sense to view a 3D image appropriately for the age of the user.

Accordingly, a method for automatically adjusting the 3D display environment appropriately for the age of a user is required.

Aspects of the exemplary embodiments relate to a 3D display apparatus which obtains information regarding the age of a user and adjusts stereoscopic sense of 3D display in accordance with the obtained information regarding age, a method for setting a display mode thereof, and a system for providing 3D display.

A method for setting a display mode in a 3D display apparatus which displays a 3D image in association with at least one 3D glasses, according to an exemplary embodiment, includes obtaining information regarding an age of a user and adjusting stereoscopic sense of the 3D image according to the age information.

The adjusting may include adjusting stereoscopic sense of the 3D image being displayed to be consistent with original stereoscopic sense of the 3D image if a user is an adult according to the age information.

The adjusting may include adjusting stereoscopic sense of the 3D image being displayed to be lower than original stereoscopic sense of the 3D image if a user is a child according to the age information.

The age information may be received from the 3D glasses.

The age information may be based on whether the 3D glasses are for a child or an adult.

The age information may be input from a user through a GUI which is displayed on the 3D display apparatus.

The method may further include adjusting brightness of the 3D image being displayed according to the age information.

The adjusting may include setting a mode to display a 3D image according to the age information and adjusting stereoscopic sense according to the set mode, and the 3D image display mode may include a child mode, an adult mode, and a family mode.

The family mode may be set if information that users of the 3D glasses include both a child and an adult is obtained.

The 3D image display mode may have stereoscopic sense which decreases in the order of an adult mode, a family mode and a child mode.

A 3D display apparatus which displays a 3D image in association with at least one 3D glasses, according to an exemplary embodiment, comprises a display unit which displays a 3D image, and a control unit which obtains information regarding an age of a user and adjusts stereoscopic sense of the 3D image according to the obtained age information.

The control unit may control stereoscopic sense of the 3D image being displayed to be consistent with original stereoscopic sense of the 3D image if a user is an adult according to the age information.

The control unit may control stereoscopic sense of the 3D image being displayed to be lower than original stereoscopic sense of the 3D image if a user is a child according to the age information.

The age information may be received from the 3D glasses.

The age information may be based on whether the 3D glasses are for a child or an adult.

The apparatus may further include a GUI generating unit which generates a GUI, and the age information may be input by a user through a GUI which is generated and displayed by the 3D display apparatus.

The control unit may control to adjust brightness of the 3D image according to the age information.

The control unit may sets a 3D image display mode according to the age information and adjusts stereoscopic sense according to the set mode, and the 3D image display mode may include a child mode, an adult mode and a family mode.

The family mode may be set if information that users of the 3D glasses include both a child and an adult is obtained.

The 3D image display mode may have stereoscopic sense which decreases in the order of an adult mode, a family mode and a child mode.

A method for setting a display mode in a 3D display apparatus which operates in association with at least one 3D glasses, according to an exemplary embodiment, comprises receiving a signal from at least one 3D glasses and determining a type of the at least one 3D glasses, setting a 3D image display mode according to the determined type of the at least one 3D glasses, and displaying the 3D image according to the set mode.

In the display mode, at least one of brightness and stereoscopic sense of the 3D image may be set differently.

The setting may include setting a 3D image display mode as a first mode if it is determined that the at least one 3D glasses are 3D glasses of a first type, and in the first mode, at least one of brightness and stereoscopic sense of the 3D image may be set to be a first value which is lower than a reference value.

The first type 3D glasses may be glasses for a child.

The displaying may further include, if the 3D image display mode is set to a first mode, displaying the 3D image while lowering stereoscopic sense of the 3D image for a predetermined period of time and if the predetermined period of time elapses, converting the 3D image into a 2D image and displaying the converted image.

The displaying may further include, if the 3D image display mode is set to a first mode, determining whether the 3D image moves faster than a reference value, and if it is determined that the 3D image moves faster than a reference value, setting stereoscopic sense of the 3D image to be lower than the first value.

The setting may include setting a 3D image display mode as a second mode if it is determined that the at least one 3D glasses are 3D glasses of a second type, and in the second mode, at least one of brightness and stereoscopic sense of the 3D image may be set to be a second value, which is higher than a reference value.

The second type 3D glasses may be glasses for an adult.

The setting may include setting a 3D image display mode as a third mode if it is determined that the at least one 3D glasses include both first type 3D glasses and second type 3D glasses, and in the third mode, at least one of brightness and stereoscopic sense of the 3D image may be set by a user.

The method may further include generating a GUI which displays the set mode; and displaying the generated GUI on the 3D image which is being displayed.

A 3D display apparatus which operates in association with at least one 3D glasses, according to an exemplary embodiment includes a display unit which displays a 3D image, a communication unit which receives a signal from the at least one 3D glasses, and a control unit which determines a type of the at least one 3D glasses using a signal received from the at least one 3D glasses, sets a 3D image display mode according to the determined type of the at least one 3D glasses, and displays the 3D image according to the set mode.

In the display mode, at least one of brightness and stereoscopic sense of the 3D image may be set differently.

The control unit may set a 3D image display mode as a first mode if it is determined that the at least one 3D glasses is a first type, and in the first mode, at least one of brightness and stereoscopic sense of the 3D image may be set to be a first value which is lower than a reference value.

The first type 3D glasses may be glasses for a child.

The control unit may control to gradually lower stereoscopic sense of the 3D image so that the 3D image is converted into a 2D image and displayed.

The control unit, if the 3D image display mode is set to a first mode, may determine whether the 3D image moves faster than a reference value, and if it is determined that the 3D image moves faster than a reference value, may set stereoscopic sense of the 3D image to be lower than a first value.

The control unit may set a 3D image display mode as a second mode if it is determined that the at least one 3D glasses are 3D glasses of a second type, and in the second mode, at least one of brightness and stereoscopic sense of the 3D image may be set to be a second value which is higher than a reference value.

The second type 3D glasses may be glasses for an adult.

The control unit may set a 3D image display mode as a third mode if it is determined that the at least one 3D glasses include both first type 3D glasses and second type 3D glasses, and in the third mode, at least one of brightness and stereoscopic sense of the 3D image may be set by a user.

The apparatus may further include a GUI generating unit which generates the set mode, and the control unit may control to display the generated GUI on the 3D image.

Also, in each of the exemplary embodiments, information may be obtained regarding a user who is wearing the 3D glasses.

A 3D image providing system, according to an exemplary embodiment, includes at least one pair of 3D glasses which transmits a specific signal if a user wearing the 3D glasses is detected and a 3D display apparatus which receives the specific signal, determines a type of the at least one 3D glasses, sets a 3D image display mode according to the determined type of the at least one pair of 3D glasses, and displays an input 3D image according to the set mode.

The above and/or other aspects of the present disclosure will be more apparent by describing certain present disclosure with reference to the accompanying drawings, in which:
FIG. 1 is a view illustrating a 3D image providing system, according to an exemplary embodiment;
FIG. 2 is a block diagram of a 3D TV, according to an exemplary embodiment;
FIG. 3 is a block diagram of 3D glasses, according to an exemplary embodiment;
FIG. 4 is a view illustrating a screen of a child mode, according to an exemplary embodiment;
FIG. 5 is a view illustrating a screen of an adult mode, according to an exemplary embodiment;
FIGS. 6A to 6C are views illustrating screens of a family mode, according to an exemplary embodiment;
FIG. 7 is a flow chart provided to explain a method for setting a display mode of a 3D TV, according to an exemplary embodiment; and
FIG. 8 is a view illustrating a graphic user interface (GUI) for inputting the age of a user, according to an exemplary embodiment.

Certain exemplary embodiments are described in greater detail below with reference to the accompanying drawings.

In the following description, like drawing reference numerals are used for the like elements, even in different drawings. The matters defined in the description, such as detailed construction and elements, are provided to assist in a comprehensive understanding of exemplary embodiments. However, exemplary embodiments can be practiced without those specifically defined matters. Also, well-known functions or constructions are not described in detail since they would obscure the application with unnecessary detail.

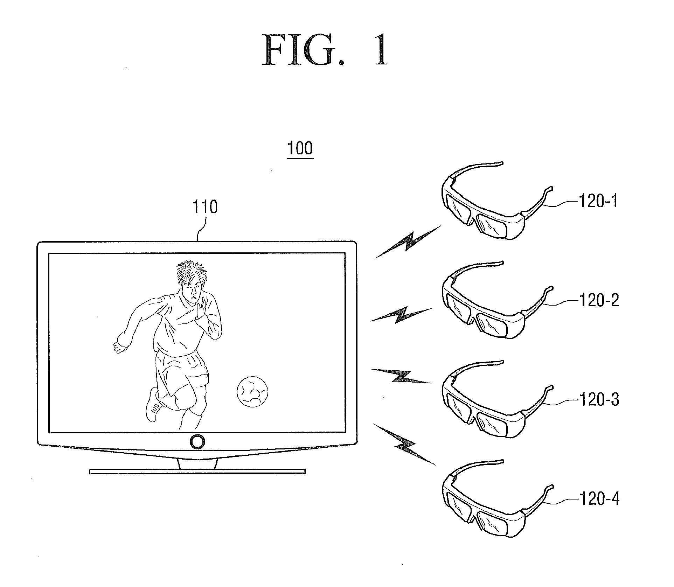

FIG. 1 is a view illustrating a 3D image providing system 100, according to an exemplary embodiment. As illustrated in FIG. 1, the 3D image providing system 100 comprises a 3D TV 110 to display a 3D image and a plurality of 3D glasses 120-1, 120-2, 120-3, 120-4, to view the 3D image.

The 3D TV 100 is a type of display apparatus, which receives the 3D image directly from a photographing apparatus such as a camera, or from a broadcasting station where the 3D image has been transmitted to after editing/processing, and then processes the 3D image, and displays it on the screen. In particular, the TV 110 processes the left eye image and the right eye image taking into account the format of the 3D image, and enables the processed left eye image and the right eye image to be displayed alternately in a timesharing manner.

Also, the 3D TV 110 generates a sync signal synchronized with the timing when the left eye image or the right eye image is displayed on the screen in a timesharing manner, and transmits the sync signal to the 3D glasses 120. Herein, the sync signal is generated as a plurality of pulses occur periodically at every vertical sync signal (Vsycn) of the TV 110.

In addition, the 3D TV 110 obtains information regarding the age of a user from an external apparatus, and adjusts 3D display environment affecting the fatigue level of a user of the 3D TV 110 using the obtained age information. Herein, the 3D display environment affecting the fatigue level of a user includes stereoscopic sense and brightness of the 3D image. Particularly, the stereoscopic sense of the 3D image may be adjusted by changing the focus or depth of the 3D image. The information regarding the age of a user may be obtained through the type of 3D glasses the user is wearing or a user may directly input the information through a GUI.

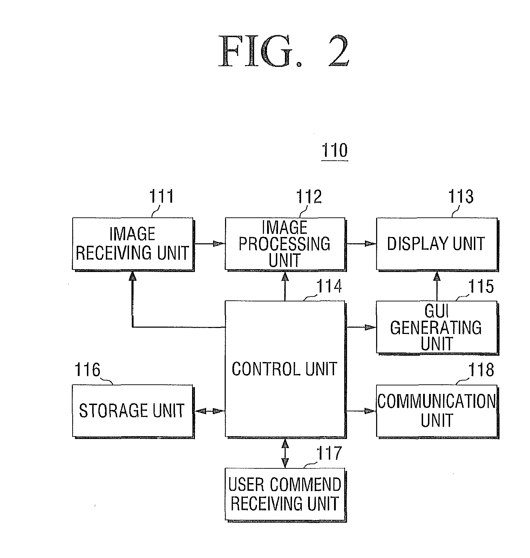

The configuration of the 3D TV 110 will now be explained in more detail with reference to FIG. 2. FIG. 2 is a block diagram of the 3D TV 110 according to an exemplary embodiment.

As illustrated in FIG. 2, the 3D TV 110, according to an exemplary embodiment, comprises an image receiving unit 111, an image processing unit 112, a display unit 113, a controlling unit 114, a GUI generating unit 115, a storage unit 116, a user command receiving unit 117, and a communication unit 118.

The image receiving unit 111 receives a broadcast transmitted wirelessly or via cables from a broadcasting station or a satellite, and demodulates the broadcast.

The image receiving unit 110 may be connected to an external device such as a camera, and receive a 3D image from it. The external device may be connected wirelessly or via cables through an interface such as S-Video, Component, Composite, D-Sub, digital video interface (DVI), and high-definition multimedia interface (HDMI). In this case, the 3D image transmitted to the image receiving unit 111 may be in various formats. Specifically, it can be in one of a general frame sequence method, a top-bottom method, a side by side method, a horizontal interleave method, a vertical interleave method, and a checker board method.

The image receiving unit 111 transmits the received 3D image to the image processing unit 112.

The image processing unit 112 performs operations of processing signals and adding GUIs such as video decoding, format analyzing, and video scaling on the received 3D image. In particular, the image processing unit 112 generates a left eye image and a right eye image, each of which fits the size of a screen (1920x1080), using the format of the 3D image transmitted to the image receiving unit 111.

In addition, the image processing unit 112 enables a GUI received from the GUI generating unit 115 which will be explained below to be added to either of or both the left eye image and right eye image.

The image processing unit 112 transmits the extracted left eye image and the right eye image alternately in a timesharing manner to the display unit 113. In other words, the image processing unit 112 transmits the left eye image and the right image to the display unit 113 in the following order: 'left eye image(L1 → right eye image (R1) → left eye image (L2) → right eye image (R2) → ...'

The display unit 113 outputs the left eye image and the right eye image transmitted from the image processing unit 112, alternately, and provides them to the user.

The GUI generating unit 115 generates a GUI to be shown on a display. The GUI generated by the GUI generating unit 115 is applied to the image processing unit 112 and added to either of or both the left eye image and the right eye image to be shown on the display.

In addition, the GUI generating unit 115 may generate a GUI regarding 3D display environment and mode related to information on the age of a user which is obtained by the 3D TV 110.

Specifically, if it is determined based on the information obtained by the 3D TV 110 that the user is a child, the GUI generating unit 115 may generate a GUI indicating that the 3D image is a child mode. Alternatively, if it is determined that the user is an adult, the GUI generating unit 115 may generate a GUI indicating that the 3D image is an adult mode. If it is determined that the users include not only a child but also an adult, the GUI generating unit 115 may generate a GUI indicating that the 3D image is a family mode. In that case, the GUI generating unit 115 may generate a menu where the users can directly adjust the brightness or stereoscopic sense of the 3D image.

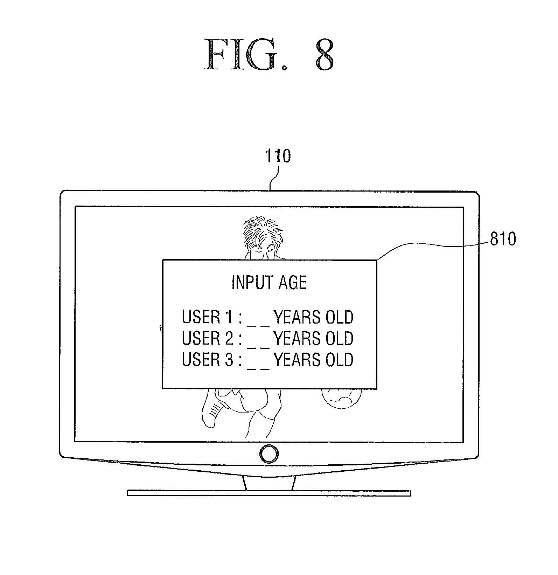

In addition, the GUI generating unit 115 may generate a menu where a user can directly input his or her age through an input means such as a remote controller as illustrated in FIG. 8, so that the 3D TV 110 may obtain information regarding the age of the user.

The storage unit 116 is a storage medium where various programs needed to operate the 3D TV 110 are stored. The storage unit 116 can be a memory or a HDD (Hard Disk Drive).

The user command receiving unit 117 receives a user command from an input means such as a remote controller and transmits it to the controlling unit 114.

The communication unit 118 generates a sync signal synchronized with the left eye image and the right eye image output alternately, and transmits the generated sync signal to the 3D glasses 120 in the form of an infrared ray. This is to enable the display unit 113 to display the left eye image during the period when the left eye portion (glass) of the 3D glasses 120 is open and to display the right eye image during the period when the right eye portion (glass) of the 3D glasses 120 is open by synchronizing the TV 110 and the 3D glasses 120 as the 3D glasses 120 opens and closes alternately.

The communication unit 118 receives a signal which is different according to the type of the 3D glasses 120. Specifically, if the 3D glasses 120 are glasses for children, the communication unit 118 receives a signal including information 120 that the 3D glasses 120 are designed for children from the 3D glasses. Alternatively, if the 3D glasses 120 are glasses for adults, the communication unit 118 receives a signal including information 120 that the 3D glasses 120 are designed for adults from the 3D glasses.

The controlling unit 114 controls the overall operations of the 3D TV 110 according to the user command received from the user command receiving unit 117.

In particular, the controlling unit 114 controls the image receiving unit 111 and the image processing unit 112, so that the 3D image can be received, the received 3D image can be separated into the left eye image and the right eye image, and each of the separated left eye image and the right eye image can be scaled or interpolated to fit one screen. Furthermore, the controlling unit 114 controls the GUI generating unit 115, so that the GUI which corresponds to the user command received from the user command receiving unit 117 can be generated, and also controls the communication unit 118, so that the sync signal which has been synchronized with the output timing of the left eye image or the right eye image can be generated and transmitted.

In addition, the control unit 114 obtains information regarding the age of a user and adjusts the 3D image display environment appropriately. Herein, the 3D image display environment, such as brightness and stereoscopic sense of a 3D image, to be adjusted relates to the level of fatigue the user may feel. The information on the age of the user may be obtained through the type of 3D glasses 120 that the user is wearing, or the user may directly input the information using an input apparatus such as a remote controller by generating a GUI on the 3D TV 110.

The method for obtaining information on the age of a user will be explained with reference to FIG. 8.

As illustrated in FIG. 8, if a command to input information regarding the age of a user is received through an input apparatus such as a remote controller, the 3D TV 110 may generate a GUI 810 to input the age of the user. If the GUI 810 to input the age of the user is generated, the user age is input through an input apparatus such as a remote controller, and thus the 3D TV 110 may obtain information regarding the age of the user. For example, if a user 1 inputs that his or her age is 29 through a remote controller, the 3D TV 110 may recognize that the user 1 is an adult. If a user 2 inputs that his or her age is 7 through a remote controller, the 3D TV 110 may recognize that the user 2 is a child.

Referring back to FIG. 2, if it is determined that a user is a child according to the information obtained by the 3D TV 110, the control unit 114 adjusts the values of the stereoscopic sense and brightness of a 3D image to be lower than the original stereoscopic sense and brightness of the 3D image. Herein, the original stereoscopic sense and brightness of the 3D image mean the values of the stereoscopic sense and brightness which are originally set for viewing the 3D image. For example, if the original setting value of stereoscopic sense is 70 in the scale of 1 to 100 and the original setting value of brightness is 70 in the scale of 1 to 100, and a user is determined to be a child, the control unit 114 may adjust the stereoscopic value to be 40 and the brightness value to be 40 by lowering the values of stereoscopic sense and brightness. Herein, the setting values of stereoscopic sense and brightness are only examples to indicate relative values, and other values may be set for stereoscopic sense and brightness.

If it is determined that a user is an adult according to the information obtained by the 3D TV 110, the control unit 114 may adjust the values of the stereoscopic sense and brightness of a 3D image to the original values. For example, if the original setting value of stereoscopic sense is 70 in the scale of 1 to 100 and the original setting value of brightness is 70 in the scale of 1 to 100, and a user is determined to be an adult, the control unit 114 may set the stereoscopic value to be 70 and the brightness value to be 70, which are the same as the original setting values.

If it is determined that users include both a child and an adult according to the age information obtained by the 3D TV 110, the control unit 114 may adjust the values of the stereoscopic sense and brightness of a 3D image to be values between the values for a child and the values for an adult. For example, if it is determined that users include both a child and an adult, the control unit 114 may adjust the values of the stereoscopic sense and brightness of a 3D image to be 55 respectively, which is a value between the value for a child and the value for an adult.

That is, the values of stereoscopic sense and brightness of a 3D image decrease in the order of an adult mode, a family mode, and a child mode.

As described above, 3D image display environment is adjusted according to the age of a user, providing the user with the 3D image appropriate for his or her age, and thus the user may feel less fatigued while viewing the 3D image.

In addition, the control unit 140 may adjust the stereoscopic sense and brightness of a 3D image by setting a display mode according to the type of a plurality of 3D glasses 120. Herein, the display mode includes an adult mode, a child mode, and a family mode.

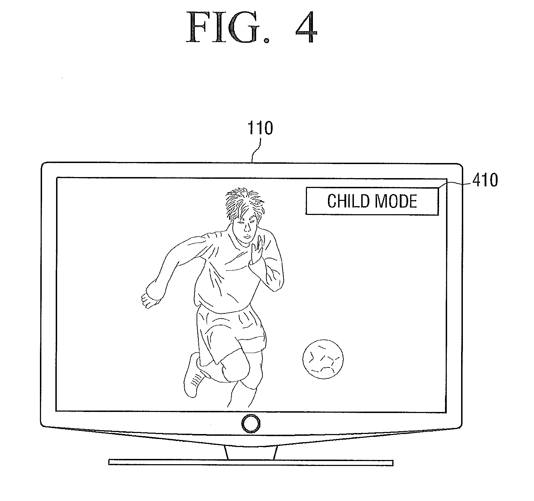

The display mode of a 3D image will be explained with reference to FIGS. 4 to 6C.

FIG. 4 is a view illustrating the screen in a child mode, according to an exemplary embodiment.

Specifically, if it is determined that a plurality of 3D glasses 120 are for a child, the control unit 114 sets the display mode to a child mode. If the display mode is set to a child mode, the control unit 114 sets the values of stereoscopic sense and brightness of a 3D image lower than predetermined values. For example, the control unit 114 may set both values of stereoscopic sense and brightness of the 3D image to be 40, less than 50 in the scale of 1 to 100. Herein, the control unit 114 may generate and display a GUI 410, which indicates that the display mode is set to a child mode, on an upper right portion of the 3D image screen as illustrated in FIG. 4.

In the case of a child mode, the control unit 114 determines whether a 3D image moves fast or not. Herein, the movement of the 3D image refers to the change of a screen or the motion of an object in the image. Whether the 3D image moves fast or not may be determined by measuring the change of pixel values based on pixel information of a predetermined area. If it is determined that the 3D image moves fast, the control unit 114 adjusts the values of stereoscopic sense and brightness of the 3D image to be lower than those for a child. For example, if it is determined that the 3D image moves fast when the setting value of brightness for a child is 40 and the setting value of stereoscopic sense for a child is 40, the control unit 114 may lower the brightness setting value to 20 and the stereoscopic sense value to 20, so that children may feel less fatigued when the image moves fast.

In the case of a child mode, the control unit 114 may convert a 3D image into a 2D image by gradually lowering the value of stereoscopic sense of the 3D image over time. For example, if the setting value of stereoscopic sense for a child is 40, the control unit 114 may lower the value of stereoscopic sense by 5 at every 15 minute, so that the setting value of stereoscopic sense may become '0' in 2 hours. Accordingly, the 3D image is converted into a 2D image in 2 hours and then displayed. This is to reduce fatigue that a child may feel when he or she watches the 3D image for a prolonged period of time.

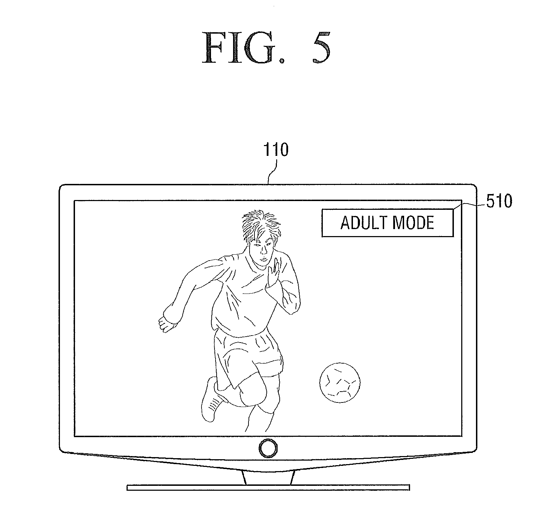

FIG. 5 is a view illustrating the screen in an adult mode, according to an exemplary embodiment.

Specifically, if it is determined that a plurality of 3D glasses 120 are for an adult, the control unit 114 sets the display mode to an adult mode. If the display mode is set to an adult mode, the control unit 114 sets the values of stereoscopic sense and brightness of a 3D image higher than predetermined values. For example, the control unit 114 may set the both values of stereoscopic sense and brightness of the 3D image to be 70, higher than 50 in the scale of 1 to 100. Herein, the control unit 114 may generate and display a GUI 510, which indicates that the display mode is set to an adult mode, on an upper right portion of the 3D image screen as illustrated in FIG. 5.

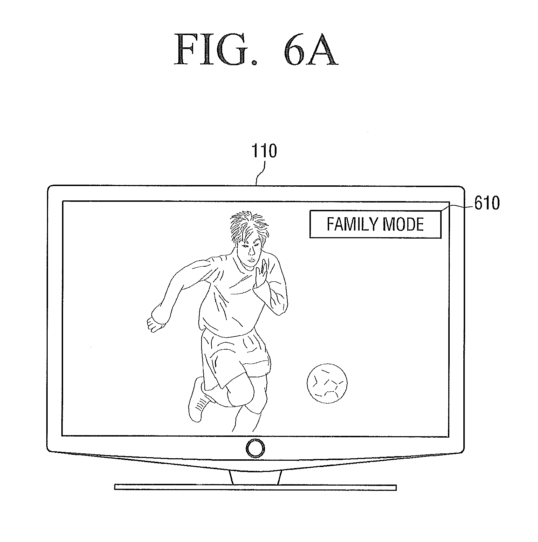

FIGS. 6A to 6C are views illustrating screens in a family mode, according to an exemplary embodiment.

Specifically, if a plurality of 3D glasses 120 include glasses for both a child and an adult, the control unit 114 sets the display mode to a family mode. If the display mode is set to a family mode, the control unit 114 may set the values of stereoscopic sense and brightness of a 3D image to be values between the values for a child and the values for an adult. For example, the control unit 114 may set the values of stereoscopic sense and brightness of the 3D image to be 55, which is the value between the value for a child and the value for an adult. Herein, the control unit 114 may generate and display a GUI 610, which indicates that the display mode is set to a family mode, on an upper right portion of the 3D image screen as illustrated in FIG. 6A.

In another exemplary embodiment of the family mode, the values of stereoscopic sense and brightness of a 3D image may not be set as the values between the values for a child and the values for an adult. Instead, a user may directly input the values of stereoscopic sense and brightness of a 3D image.

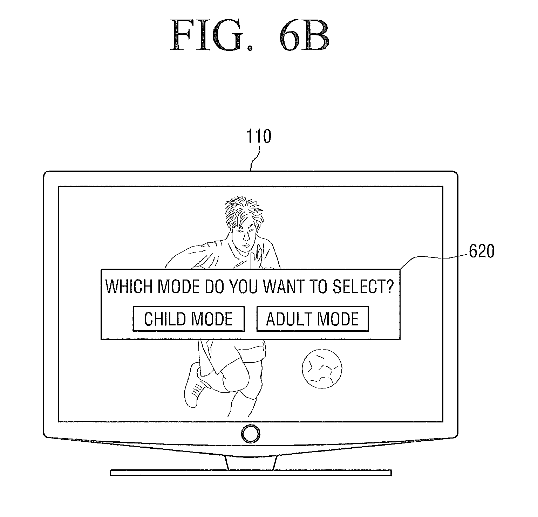

For example, the control unit 114 generates a menu 620 for selecting one of a child mode and an adult mode as illustrated in FIG. 6B. Accordingly, a user may select one of a child mode and an adult mode through an input apparatus such as a remote controller. If the user selects an adult mode and the 3D glasses 120 are for a child, operation duty of the 3D glasses 120 may be automatically adjusted to reduce brightness while the 3D glasses 120 are operated, so that a child who is viewing a 3D image in an adult mode may feel less fatigued while viewing the 3D image.

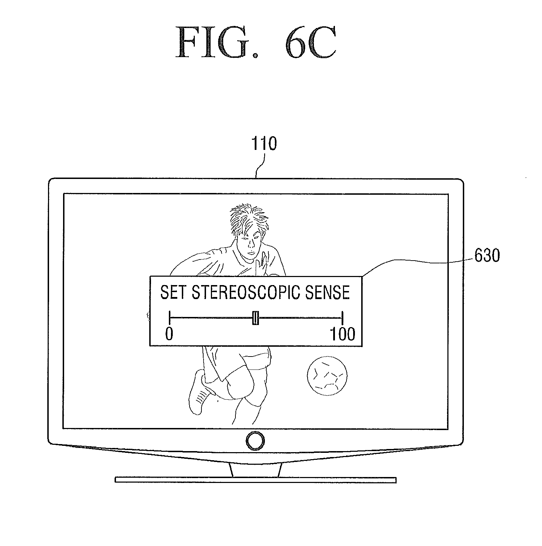

In another exemplary embodiment, the control unit 114 generates a menu 630 for setting the level of stereoscopic sense directly as illustrated in FIG. 6C. In this case, the menu 630 may be provided in the form of a progress bar. Accordingly, a user may set the level of stereoscopic sense through an input apparatus such as a remote controller. In FIG. 6C, menu 630 which adjusts only stereoscopic sense is illustrated, but the control unit 114 may generate a menu which also adjusts brightness.

As described above, a display mode is set according to the type of a plurality of 3D glasses 120-1, 120-2, 120-3, 120-4, and thus a user may automatically view a 3D image which is appropriate for his or her age.

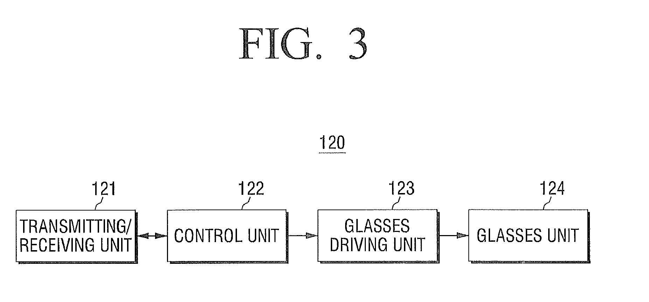

Referring back to FIG. 1, the plurality of 3D glasses 120-1, 120-2, 120-3, 120-4 open and close the left eye glass and the right eye glass alternately according to a sync signal received from the TV 110, so that a user may view the left eye image and the right eye image through the left eye glass and the right eye glass respectively. Hereinafter, the detailed structure of the 3D glasses 120 will be explained with reference to FIG. 3.

FIG. 3 is a block diagram of one of the 3D glasses 120 according to an exemplary embodiment. As illustrated in FIG. 3, the 3D glasses 120 comprise a transmitting/receiving unit 121, a controlling unit 122, a glasses-driving unit 123 and a glasses unit 124.

The transmitting/receiving unit 121 receives a sync signal regarding a 3D image from the communication unit 118 of the 3D TV 110 which is connected wired or wirelessly. In particular, the communication unit 118 emits a sync signal using an infrared ray in a straight line, and the transmitting/receiving unit receives a sync signal from the emitted infrared ray. For example, the sync signal transmitted from the communication unit 118 to the transmitting/receiving unit 121 is an infrared signal having 60Hz frequency.

In addition, the transmitting/receiving unit 121 transmits a signal having information regarding the type of 3D glasses to the communication unit 118 of the 3D TV 110.

The control unit 122 controls overall operation of the 3D glasses 120. In particular, the control unit 122 generates a control signal based on an output signal received from the transmitting/receiving unit 121 and controls the glasses driving unit 123 by transmitting the generated control signal to the glasses driving unit 123. In particular, the control unit 122 controls the glasses driving unit 123 to generate a driving signal for driving the glasses unit 124.

If it is determined that a user wears the 3D glasses 120, the control unit 122 controls the transmitting/receiving unit 121 to transmit a signal including information regarding the type of 3D glasses to the communication unit 118 of the 3D TV 110.

The glasses driving unit 123 generates a driving signal based on a control signal received from the control unit 122.

The glasses unit 124 is consisted of left eye glasses and right eye glasses and opens and closes each glasses according to the driving signal received from the driving unit 123.

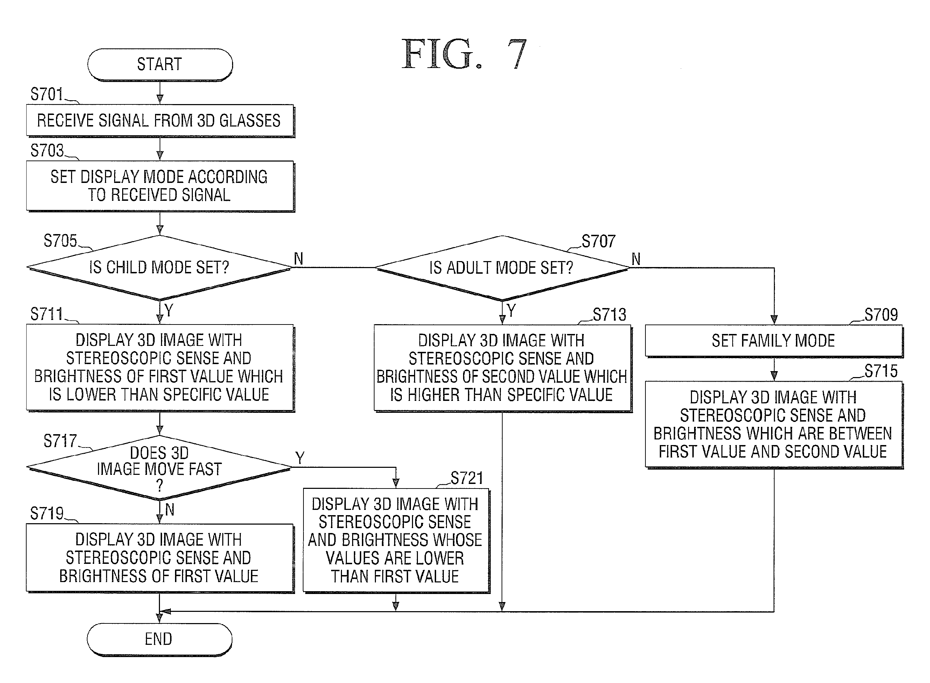

Hereinafter, a method for setting a display mode according to the type of 3D glasses 120 will be explained with reference to FIG. 7.

FIG. 7 is a flow chart provided to explain a method for setting a display mode of the 3D TV 110 according to an exemplary embodiment.

The 3D TV 100 receives a signal from the plurality of 3D glasses 120-1, 120-2, 120-3, 120-4 (S701), and the signal includes information on the type of 3D glasses and whether it is for a child or an adult.

If the 3D TV 110 receives the signal including information on the type of 3D glasses from the plurality of 3D glasses 120-1, 120-2, 120-3, 120-4, a 3D image display mode is set according to the received signal (S703). In this case, the display mode includes a child mode, an adult mode and a family mode.

If a child mode is set as a display mode (S705-Y), the 3D TV 110 sets the values of stereoscopic sense and brightness of a 3D image lower than a predetermined value, which is the first value, and displays the 3D image. Specifically, if it is determined that all of the plurality of 3D glasses 120-1, 120-2, 120-3, 120-4 are for children, a child mode is set as a display mode. If a child mode is set, the values of stereoscopic sense and brightness of the 3D image are set to the first value, which is lower than a predetermined value. For example, if a child mode is set, the 3D TV 110 may set the values of stereoscopic sense and brightness of the 3D image to 40, which is lower than 50 in the scale of 1 to 100. Herein, the 3D TV 110 may display a GUI 410 indicating a child mode in an upper right portion of the 3D image screen.

If a child mode is set, whether a 3D image moves fast or not is determined (S717). Herein, the movement of the 3D image refers to the change of a 3D image screen or the motion of an object in the image. Whether the 3D image moves fast or not may be determined by measuring the change of pixel values based on pixel information of a predetermined area. If it is determined that the 3D image moves fast because pixel values change more than a predetermined level (S717-Y), the 3D TV 110 displays the 3D image after lowering the values of stereoscopic sense and brightness of the 3D image to be lower than the first value (S721). For example, if a brightness value and a stereoscopic sense value in a child mode is 40 respectively, and if it is determined that a 3D image moves fast, the 3D TV 110 may lower the brightness value and the stereoscopic sense value to 20 respectively, so that children may feel less fatigued when they view a screen with fast moving 3D images.

Alternatively, if it is determined that the 3D image does not move fast because pixel values change less than a predetermined level (S717-N), the 3D TV 110 displays the 3D image after setting the values of stereoscopic sense and brightness of the 3D image to the first value (S719).

If an adult mode is set as a display mode (S707-Y), the 3D TV 110 displays a 3D image after setting the values of stereoscopic sense and brightness of the 3D image higher than a predetermined value, which is the second value (S713). Specifically, if it is determined that all of the plurality of 3D glasses 120-1, 120-2, 120-3, 120-4 are for adults, an adult mode is set as a display mode. If an adult mode is set, the values of stereoscopic sense and brightness of the 3D image are set to the second value, which is higher than a predetermined value. For example, if an adult mode is set, the 3D TV 110 may set the values of stereoscopic sense and brightness of the 3D image to 70, which is higher than 50 in the scale of 1 to 100. Herein, the 3D TV 110 may display a GUI 510 indicating an adult mode on an upper right portion of the 3D image screen.

If a family mode is set as a display mode (S709), the 3D TV 110 displays a 3D image after setting the values of stereoscopic sense and brightness of the 3D image to a value between the first and the second values (S715). Specifically, if it is determined that the plurality of 3D glasses 120-1, 120-2, 120-3, 120-4 include glasses for both children and adults, a family mode is set as a display mode. If a family mode is set, the values of stereoscopic sense and brightness of the 3D image are set to the value between the first and the second values. For example, the 3D TV 110 may set the values of stereoscopic sense and brightness of the 3D image to 55 in the scale of 1 to 100, which is higher than the first value, 40, and lower than the second value, 70. Herein, the 3D TV 110 may display a GUI 610 indicating a family mode on an upper right portion of the 3D image screen.

According to the above method for setting a display mode, the 3D TV 110 determines the age of a user and displays a 3D image in an appropriate display environment accordingly. Therefore, the user may feel less fatigued while viewing the 3D image.

In the above description, a 3D display apparatus is the 3D TV 110, but this is only an example. The technical feature of the present invention may be applied to any 3D display apparatus which can display a 3D image employing a shutter glasses method. For example, 3D display apparatuses may be implemented as a 3D projector or a 3D monitor.

In the above description, a display mode includes a child mode, an adult mode, and a family mode, but this is only an example. The technical feature of the present invention may be applied to a mode of other age groups. For example, a display mode may further include a juvenile mode and a senior mode.

In the above description, stereoscopic sense and brightness of a 3D image are selected as display environmental factors affecting the fatigue level of a user, but this is only an example. The technical features of the present invention may be applied to other display environmental factors affecting the fatigue level of a user.

According to exemplary embodiments of the present invention as described above, a 3D display apparatus determines the age of a user and displays a 3D image in which stereoscopic sense and brightness are adjusted appropriately according to the age of the user. Therefore, the user may view the 3D image which is adjusted for his or her age.

Although a few exemplary embodiments of the present invention have been shown and described, it would be appreciated by those skilled in the art that changes may be made in this embodiment without departing from the principles of the invention, the scope of which is defined in the claims.

## Claims

1. A method for setting a display mode in a 3D display apparatus which displays a 3D image in association with at least one 3D glasses, the method comprising:
obtaining information regarding an age of a user who is wearing the 3D glasses; and
adjusting stereoscopic sense of the 3D image according to the age information.

2. The method as claimed in claim 1, wherein the adjusting comprises adjusting the stereoscopic sense of the 3D image being displayed to be consistent with an original stereoscopic sense of the 3D image if a user is an adult according to the age information.

3. The method as claimed in claim 1, wherein the adjusting comprises adjusting the stereoscopic sense of the 3D image being displayed to be lower than original stereoscopic sense of the 3D image if a user is a child according to the age information.

4. The method as claimed in one of claim 1 to claim 3, wherein the age information is received from the 3D glasses.

5. The method as claimed in claim 4, wherein the age information is based on whether the 3D glasses are for a child or an adult.

6. The method as claimed in one of claim 1 to claim 3, wherein the age information is input from a user through a GUI which is displayed on the 3D display apparatus.

7. The method as claimed in one of claim 1 to claim 6, further comprising:
adjusting brightness of the 3D image being displayed according to the age information.

8. The method as claimed in one of claim 1 to claim 7, wherein the adjusting comprises:
setting a mode to display a 3D image according to the age information; and
adjusting stereoscopic sense according to the set mode,
wherein the 3D image display mode includes a child mode, an adult mode, and a family mode.

9. The method as claimed in claim 8, wherein the family mode is set if information that users of the 3D glasses include both a child and an adult is obtained.

10. The method as claimed in claim 9, wherein the 3D image display mode has stereoscopic sense which decreases in the order of an adult mode, a family mode and a child mode.

11. A 3D display apparatus which displays a 3D image in association with at least one 3D glasses, the apparatus comprising:
a display unit which displays a 3D image; and
a control unit which obtains information regarding an age of a user who is wearing the 3D glasses and adjusts stereoscopic sense of the 3D image according to the obtained age information.

12. The apparatus as claimed in claim 11, wherein the control unit controls the stereoscopic sense of the 3D image being displayed to be consistent with an original stereoscopic sense of the 3D image if a user is an adult according to the age information.

13. The apparatus as claimed in claim 11, wherein the control unit controls the stereoscopic sense of the 3D image being displayed to be lower than an original stereoscopic sense of the 3D image if a user is a child according to the age information.

14. The apparatus as claimed in one of claim 11 to claim 13, wherein the age information is received from the 3D glasses.

15. The apparatus as claimed in claim 14, wherein the age information is based on whether the 3D glasses are for a child or an adult.
